# EUROPÄISCHE PATENTSCHRIFT

(11) **EP 3 526 098 B1**
(45) Veröffentlichungstag und Bekanntmachung des Hinweises auf die Patenterteilung: **12.08.2020**
(21) Anmeldenummer: 17821814.5
(22) Anmeldetag: 04.12.2017
(51) Int. Cl.: B61L 15/00, B61L 27/00, H04B 10/116

(54) **NETZWERKANBINDUNG VON FAHRZEUGEN**
NETWORK CONNECTION OF VEHICLES
CONNEXION AU RÉSEAU DE VÉHICULES

(30) Priorität: 09.12.2016 DE 102016224613
(43) Veröffentlichungstag der Anmeldung: 21.08.2019
(73) Patentinhaber: Siemens Mobility GmbH, 81739 München (DE)
(72) Erfinder: BERGER, Gisbert, 12487 Berlin (DE)
(86) Internationale Anmeldenummer: PCT/EP2017/081284
(87) Internationale Veröffentlichungsnummer: WO 2018/104192

(56) Entgegenhaltungen:
- DE-A1-102013 001 358
- JP-A- H0 263 331
- JP-A- S6 012 832
- SHINICHIRO HARUYAMA ET AL: "New ground-to-train high-speed free-space optical communication system with fast handover mechanism", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6. März 2011 (2011-03-06), Seiten 1-3, XP031946727, ISBN: 978-1-4577-0213-6

## Beschreibung

Die Erfindung betrifft ein Datenübertragungssystem. Weiterhin betrifft die Erfindung ein streckengebundenes Transportsystem. Überdies betrifft die Erfindung ein Verfahren zum Übermitteln von Daten zwischen einem Fahrzeug und einem stationären Netzwerk.

Im öffentlichen Personenverkehr werden heutzutage von Fahrgästen Kommunikationsdienste gewünscht, um während der Fahrt Zugang zu Informationen zu haben und mit anderen Personen kommunizieren zu können.

Für die meisten modernen Fahrzeuge wird heutzutage eine Netzwerkanbindung zur Kommunikation mit stationären oder anderen mobilen Netzwerkteilnehmern zur Verfügung gestellt. Eine solche Netzwerkanbindung wird zum Beispiel für folgende Aufgaben benötigt:
- die Übermittlung von Betriebs- und Verkehrsdaten von Fahrzeugen an stationäre Einrichtungen,
- die Übermittlung von Video- und Audiodaten aus dem Inneren eines Fahrzeugs oder von Außensensoren an stationäre Einheiten zur Begutachtung,
- die Übermittlung von Alarmsignalen mit oder ohne zusätzliche Multimediadaten an stationäre Einrichtungen,
- die Bereitstellung von nur per Breitbanddatenübertragung zu übermittelnden Informationen mit Multimediadaten, wie zum Beispiel Fahrpläne, Flugpläne, Voraussagen, für die Passagiere,
- Internet an Bord des Fahrzeugs mit hoher Bandbreite für Passagiere und Personal,
- Breitbandverbindungen für Audio- und Videotelefonie für das Betriebspersonal und die Passagiere, beispielsweise über die Bereitstellung von VOIP-Anschlüssen,
- Bereitstellung von Multimediainhalten für die Passagiere,
- Nutzung von Cloud-Computing für die Bereitstellung von Rechenressourcen für die Lösung von Problemen in dem Fahrzeug, wie zum Beispiel CCTV-Analysen, ADAS-Analysen etc.

Problematisch ist die Situation, wenn die Anzahl der Personen in einem solchen Verkehrsmittel eine Maximalzahl übersteigt, so dass die Bandbreite des genutzten Kommunikationsnetzwerks nicht mehr ausreicht. Insbesondere bei schienengebundenen Fahrzeugen im Personenverkehr ergeben sich besondere Engpässe, da wegen der deutlich höheren Beförderungsleistung für die genannten Aufgaben besonders hohe Bandbreiten benötigt werden. Bei Bussen ist die Situation etwas günstiger, da aufgrund der niedrigeren Zahl der beförderten Fahrgäste die pro Passagier verfügbare Bandbreite deutlich höher ausfällt.

Andererseits eignen sich schienengebundene Massenverkehrsmittel wie kein anderes Verkehrsmittel für die Nutzung von Internet an Bord, da diese beste Bedingungen für störungsfreies Arbeiten bieten. Dies ist vor allem einer hohen Laufruhe, einem ausreichenden Platzangebot, idealen Arbeitsbedingungen mit Tischen und Stromversorgung und kaum Beeinträchtigungen durch Reisekrankheit zu verdanken.

Aktuell sind Züge über schnelle drahtlose Verbindungen mit einem stationären Netzwerk verbunden. Selbst wenn einzelne Waggons eine getrennte Funkverbindung zu dem Netzwerk aufweisen, wird die Bandbreite nur unzureichend verbessert, da in der Regel die einzelnen Waggons um die Ressourcen der gleichen Funkzelle des stationären Netzwerks konkurrieren.

In HARUYAMA, Sh. et al.: New Ground-to-Train High-Speed Free-Space Optical Communication System with Fast Handover Mechanism. In: Optical Fiber Communication Conference and Exposition and the National Fiber Optic Engineers Conference 2011 wird ein Kommunikationssystem mit optischer Übertragung zwischen Schienenfahrzeugen und stationären Einheiten beschrieben.

In EP 2 056 492 A1 wird ein mobiles optisches Kommunikationssystem für Schienenfahrzeuge beschrieben, wobei an der Unterseite der Schienenfahrzeuge Kommunikationseinheiten angeordnet sind, die mit im Gleisbett angeordneten stationären Kommunikationseinheiten zusammenwirken.

In DE 697 27 562 T2 wird ein Amphibienfahrzeug beschrieben, welches mit Hilfe von auf einem Fahrweg angeordneten Lichtduschen gesteuert wird.

In WO 2014/ 195 431 A1 wird ein Kommunikationssystem zur drahtlosen Datenübertragung zwischen einer mobilen Einheit und einer stationären Kommunikationseinrichtung beschrieben.

Aus der Offenlegungsschrift DE 10 2013 001 358 A1 ist ein System für eine Anlage zur berührungslosen Datenübertragung und ein Verfahren zum Betreiben eines Systems bekannt, welches stationär angeordnete Sende-Empfangsmodule und ein Fahrzeug mit Sende-Empfangsmodul aufweist, wobei das jeweilige Sende-Empfangsmodul eine steuerbare Lichtquelle und einen Lichtsensor aufweist, so dass eine Datenübertragung zwischen dem Fahrzeug und den stationär angeordneten Modulen ausführbar ist. In einem Ausführungsbeispiel sind die stationär angeordneten Lichtquellen und die am Fahrzeug angeordnete Lichtquelle jeweils zweifach ausgeführt. Bei Ansteuerung der jeweils ersten Lichtquelle ist Licht mit einer anderen Polarisationsrichtung abstrahlbar als bei Ansteuerung der jeweils zweiten Lichtquelle. Zusammen mit der jeweils ersten und zweiten Lichtquelle ist jeweils ein erster Lichtsensor und ein zweiter Lichtsensor auch von den Polarisationsfolien abgedeckt. Die Ausrichtung des Fahrzeugs in der Verfahrebene ist durch einen Verdrehwinkel kennzeichenbar, der gegen die Nordrichtung gemessen wird. Mittels der Lichtsensoren wird ein von dem Verdrehwinkel abhängiger Intensitätswert gemessen, wobei die Signale des ersten und des zweiten Lichtsensors eine Winkelverschiebung von 90° zueinander aufweisen.

Mithin besteht ein Problem einer zu geringen Datenübertragungskapazität bei Fahrzeugen, insbesondere mit größeren Fahrgastzahlen.

Diese Aufgabe wird durch ein Datenübertragungssystem gemäß Patentanspruch 1, ein streckengebundenes Transportsystem gemäß Patentanspruch 8 und einem Verfahren zum Übermitteln von Daten zwischen einem Fahrzeug und einem stationären Netzwerk gemäß Patentanspruch 9 gelöst.

Das erfindungsgemäße Datenübertragungssystem für ein streckengebundenes Transportsystem mit mindestens einem Fahrzeug weist eine Mehrzahl von fahrzeugseitigen optischen Sende-/Empfangseinrichtungen an dem mindestens einen Fahrzeug, welche in Querrichtung zur Fahrtrichtung nebeneinander angeordnet sind, und eine Mehrzahl von streckenseitigen, stationären optischen Sende-/Empfangseinrichtungen auf, welche längs einer Fahrstrecke des Fahrzeugs seitlich zu der Fahrstrecke abschnittsweise auf der linken Streckenseite und abschnittsweise auf der rechten Streckenseite angeordnet sind, wobei in einem Übergangsabschnitt die streckenseitigen optischen Sende-/Empfangseinrichtungen auf beiden Streckenseiten angeordnet sind, wobei die Mehrzahl von fahrzeugseitigen optischen Sende-/Empfangseinrichtungen dazu eingerichtet sind, zumindest mit der ihnen am nächsten positionierten streckenseitigen, stationären optischen Sende-/Empfangseinrichtung zu kommunizieren und unabhängig voneinander separate Kommunikationsverbindungen mit der jeweils vollen möglichen Bandbreite mit einer der streckenseitigen, stationären optischen Sende-/Empfangseinrichtungen zu halten, und wobei in einem Übergangsabschnitt das Fahrzeug gleichzeitig über fahrzeugseitige optische Sende-/Empfangseinrichtungen auf beiden Seiten des Fahrzeugs kommuniziert. Als streckengebundenes Transportsystem soll in diesem Zusammenhang ein Transportsystem verstanden werden, welches fest definierte Transportwege aufweist, von denen die Fahrzeuge nicht abweichen. Beispiele hierfür sind Straßensysteme oder Schienensysteme. Dabei sind die Mehrzahl von fahrzeugseitigen optischen Sende-/Empfangseinrichtungen dazu eingerichtet, zumindest mit der ihnen am nächsten positionierten streckenseitigen, stationären optischen Sende-/Empfangseinrichtung zu kommunizieren und unabhängig voneinander separate Kommunikationsverbindungen mit der jeweils vollen möglichen Bandbreite mit einer der streckenseitigen, stationären optischen Sende-/Empfangseinrichtungen zu halten. Als optische Datenübertragung soll in diesem Zusammenhang vorzugsweise eine Datenübertragung mit Licht verstanden werden, wobei Licht sichtbares Licht und auch Infrarotlicht und Ultraviolettlicht mit einschließen soll. Das Licht kann zur Übertragung zum Beispiel als gerichtetes Licht erzeugt werden. Unter gerichtetem Licht soll ein Lichtstrahl oder Lichtkegel verstand werden, der eine gewisse Richtungseinschränkung aufweist. Der Einsatz optischer Datenübertragung hat den Vorteil, dass diese Art der Datenübertragung eine hohe Datenrate bzw. Bandbreite ermöglicht, so dass insbesondere auch ein gleichzeitiger Zugriff durch eine Vielzahl von Fahrgästen auf ein stationäres Netzwerk ermöglicht wird. Vorteilhaft können die stationären Sende-/Empfangseinrichtungen aufgrund der Streckenbindung der Fahrzeuge in kurzer Distanz zu den fahrzeugseitigen Sende-/Empfangseinrichtungen angeordnet werden, so dass eine optische Datenübertragung über geringe Entfernung ermöglicht wird.

Dadurch können die sonst üblichen Störungen, welche zum Beispiel durch schlechtes Wetter, Partikel oder Objekte zwischen Sender und Empfänger bedingt sind, weitgehend vermieden werden. Eine optische Datenübertragung bringt zudem den Vorteil mit sich, dass bei der Datenübertragung mit Hilfe mehrerer fahrzeugseitiger und/oder stationärer Sende-/Empfangseinrichtungen im Gegensatz zur Funkübertragung keine Störungen der einzelnen Einrichtungen untereinander auftreten können, wenn, wie beschrieben, das zur Datenübertragung verwendete Licht eine gewisse Richtungseinschränkung aufweist, so dass Lichtstrahlen bzw. Lichtkegel von unterschiedlichen Sendern sich nicht überschneiden. Alternativ kann zur Datenübertragung auch ungerichtetes Licht genutzt werden, wobei die Datenübertragungsreichweite auf einen vorbestimmten Abstandswert beschränkt ist. Auf diese Weise kann ebenfalls erreicht werden, dass das Sende-/Empfangseinrichtungen Daten parallel übertragen können, ohne sich gegenseitig zu stören. Mithin lässt sich die Bandbreite durch parallele Datenübertragung mit mehreren Sende-/Empfangseinrichtungen, die sich bei erfindungsgemäßer Auslegung nicht gegenseitig stören, noch weiter erhöhen.

Sind zum Beispiel auf beiden Seiten des Fahrzeugs am Streckenrand stationäre, optische Sende-/Empfangseinrichtungen positioniert, so kann das Fahrzeug parallel zu beiden Seiten hin kommunizieren, wobei nebeneinander in Querrichtung angeordnete fahrzeugseitige optischen Sende-/Empfangseinrichtungen nach verschiedenen Seiten hin kommunizieren. Auf diese Weise kann die Bandbreite der Kommunikation erhöht werden. Weiterhin kann auch eine erhöhte Flexibilität bei der Positionierung der streckenseitigen, stationären optischen Sende-/Empfangseinrichtungen erreicht werden.

Das erfindungsgemäße streckengebundene Transportsystem weist mindestens eine Fahrstrecke auf, auf der sich streckengebundene Fahrzeuge bewegen, und mindestens ein erfindungsgemäßes Datenübertragungssystem.

Bei dem erfindungsgemäßen Verfahrens werden in einem streckengebundenen Transportsystem Daten zwischen einem Fahrzeug mit einer Mehrzahl von fahrzeugseitigen optischen Sende-/Empfangseinrichtungen, welche in Querrichtung zur Fahrtrichtung nebeneinander angeordnet sind, und einer Mehrzahl von streckenseitigen, stationären optischen Sende-/Empfangseinrichtungen, welche längs einer Fahrstrecke des Fahrzeugs seitlich zu der Fahrstrecke angeordnet sind und mit einem Netzwerk über eine Kommunikationsverbindung verbunden sind, ausgetauscht. Dabei kommunizieren die Mehrzahl von fahrzeugseitigen optischen Sende-/Empfangseinrichtungen zumindest mit der ihnen am nächsten positionierten streckenseitigen, stationären optischen Sende-/Empfangseinrichtung und halten unabhängig voneinander separate Kommunikationsverbindungen mit der jeweils vollen möglichen Bandbreite mit einer der streckenseitigen, stationären optischen Sende-/Empfangseinrichtungen. D.h. die Datenübertragung zwischen dem Fahrzeug und einem landseitigen Datennetzwerk erfolgt per optischer Datenübertragung zumindest über die einander am nächsten positionierten optischen Sende-/Empfangseinrichtungen. Wie bereits erwähnt, werden durch diese Vorgehensweise eine erhöhte Bandbreite bei der Datenübertragung sowie eine geringere Störanfälligkeit erreicht.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer bevorzugten Variante des erfindungsgemäßen Datenübertragungssystems sind die Mehrzahl von streckenseitigen, stationären optischen Sende-/Empfangseinrichtungen dazu eingerichtet, eine optische Kommunikationsverbindung mit einer fahrzeugseitigen optischen Sende-/Empfangseinrichtung aufrechtzuerhalten, bis eine Verbindungsaufnahme der in Fahrtrichtung jeweils nächsten streckenseitigen, stationären optischen Sende-/Empfangseinrichtung mit der fahrzeugseitigen optischen Sende-/Empfangseinrichtung erreicht ist, so dass sich die fahrzeugseitige optische Sende-/Empfangseinrichtung ständig in Verbindung mit mindestens einer streckenseitigen, stationären optischen Sende-/Empfangseinrichtung befindet.

Mithin kann eine zeitlich ununterbrochene Kommunikationsverbindung zwischen Fahrzeug und Landseite aufrechterhalten werden.

In einer Ausgestaltung des erfindungsgemäßen Datenübertragungssystems sind die streckenseitigen, stationären optischen Sende-/Empfangseinrichtungen von der Mehrzahl von fahrzeugseitigen optischen Sende-/Empfangseinrichtungen und voneinander derart beabstandet, dass eine ständige Verbindung zu der mindestens einen fahrzeugseitigen optischen Sende-/Empfangseinrichtung ermöglicht ist. Bei dieser Variante sind die Abstände zwischen mindestens einer stationären und der mindestens einen fahrzeugseitigen optischen Sende-/Empfangseinrichtung stets ausreichend klein, dass mit mindestens eines Kommunikationsverbindung zwischen einer stationären und der mindestens einen fahrzeugseitigen optischen Sende-/Empfangseinrichtung aufrechterhalten werden kann. Mithin kann fahrzeugseitig eine ständige und übergangslose Kommunikationsverbindung aufrechterhalten werden. Vorzugsweise werden die stationären optischen Sende-Empfangseinrichtungen zudem in ausreichend großen Abständen zueinander aufgestellt, dass eine parallele, störungsfreie Kommunikation von benachbarten stationären optischen Sende-/Empfangseinrichtungen mit fahrzeugseitigen optischen Sende-Empfangseinrichtungen ermöglicht ist.

In einer bevorzugten Variante weist das erfindungsgemäße Datenübertragungssystem eine Mehrzahl von fahrzeugseitigen optischen Sende-/Empfangseinrichtungen an einem jeweiligen Fahrzeug auf, welche in Längsrichtung angeordnet sind und dazu eingerichtet sind, unabhängig voneinander separate Kommunikationsverbindungen mit der jeweils vollen möglichen Bandbreite mit einem der streckenseitigen, stationären optischen Sende-/Empfangseinrichtungen zu halten. Durch Anordnung in Längsrichtung wird eine parallele Datenübertragung über mehrere fahrzeugseitige optische Sende-/Empfangseinrichtungen ermöglicht, was die erreichbare erzielbare Datenübertragungsrate weiter erhöht. Bei dieser Art der parallelen Datenübertragung kommunizieren mehrere Paare von jeweils einander gegenüberliegende fahrzeugseitigen und streckenseitigen, stationären Sende-/Empfangseinrichtungen zeitgleich miteinander. Besonders bevorzugt werden die einzelnen fahrzeugseitigen optischen Sende-/Empfangseinrichtungen auf dem Fahrzeug derart positioniert, dass ein notwendiger Störabstand zwischen den einzelnen Einrichtungen eingehalten wird, so dass eine störungsfreie parallele Datenübertragung erreicht wird.

Wie erwähnt, weist das erfindungsgemäße Datenübertragungssystem eine Mehrzahl von fahrzeugseitigen optischen Sende-/Empfangseinrichtungen an einem jeweiligen Fahrzeug auf, welche quer zur Fahrtrichtung nebeneinander angeordnet sind und dazu eingerichtet sind, unabhängig voneinander separate Kommunikationsverbindungen mit der jeweils vollen möglichen Bandbreite mit einer der streckenseitigen, stationären optischen Sende-/Empfangseinrichtungen zu halten. Sind zum Beispiel auf beiden Seiten des Fahrzeugs am Streckenrand stationäre, optische Sende-/Empfangseinrichtungen positioniert, so kann das Fahrzeug parallel zu beiden Seiten hin kommunizieren, wobei nebeneinander in Querrichtung angeordnete fahrzeugseitige optischen Sende-/Empfangseinrichtungen nach verschiedenen Seiten hin kommunizieren. Auf diese Weise kann die Bandbreite der Kommunikation erhöht werden. Weiterhin kann auch eine erhöhte Flexibilität bei der Positionierung der streckenseitigen, stationären optischen Sende-/Empfangseinrichtungen erreicht werden.

Die parallelen Anordnungen der fahrzeugseitigen optischen Sende-/Empfangseinrichtungen in Längsrichtung und in Querrichtung können auch miteinander kombiniert werden, um so die Bandbreite der Datenübertragung weiter zu erhöhen.
Arbeiten benachbarte Sende-/Empfangseinrichtungen mit Trägersignalen mit unterschiedlichen Lichtwellenlängen, so können auf diese Weise auch Mindestabstände von Sende-/Empfangseinrichtungen zueinander weiter reduziert werden, da sich zum Beispiel zwei benachbarte Sende-/Empfangseinrichtungen mit unterschiedlichen Wellenlängen bei der Übertragung nicht stören.

In einer bevorzugten Ausgestaltung des erfindungsgemäßen Datenübertragungssystems sind die optischen Sende-/Empfangseinrichtungen dazu eingerichtet, gleichzeitig über mehrere unterschiedliche Lichtwellenlängen als Trägersignal miteinander zu kommunizieren. Auf diese Weise kann die Bandbreite der Datenübertragung zwischen den fahrzeugseitigen, optischen Sende-/Empfangseinrichtungen und den streckenseitigen stationären optischen Sende-/Empfangseinrichtungen weiter erhöht werden.

In einer Ausgestaltung des erfindungsgemäßen Datenübertragungssystems sind die optischen Sende-/Empfangseinrichtungen dazu eingerichtet, über mehrere unterschiedliche Modulationsfrequenzen je Lichtwellenlänge miteinander zu kommunizieren. Auch diese Maßnahme dient der Erhöhung der Bandbreite der Datenübertragung zwischen den fahrzeugseitigen, optischen Sende-/Empfangseinrichtungen und den streckenseitigen stationären optischen Sende-/Empfangseinrichtungen.

In einer Variante des erfindungsgemäßen Datenübertragungssystems sind die streckenseitigen optischen Sende-/Empfangseinrichtungen auf beiden Seiten der Fahrstrecke in Längsrichtung zumindest teilweise überlappend angeordnet und sind die fahrzeugseitigen Sende-/Empfangseinrichtungen auf beiden Seiten des jeweiligen Fahrzeugs angeordnet. Eine solche Anordnung erlaubt es bei der Positionierung der streckenseitigen, stationären optischen Sende-/Empfangseinrichtungen, die Seiten zu wechseln, wobei durch die überlappende Anordnung in einem Zwischenabschnitt ein unterbrechungsfreier Übergang bei dem Wechsel der Seiten erreicht wird.

Eine sinnvolle Anwendung des erfindungsgemäßen Datenübertragungssystems kann auch zur Ausleuchtung von Tunneln durch entsprechende stationäre, optische Sende-/Empfangseinrichtungen genutzt werden. Dabei kann eine vergleichsweise geringe Bandbreite der Übertragung gewählt werden und es genügen fahrzeugseitig wenige Sende-/Empfangseinrichtungen, die für eine vereinfachte Aufrechterhaltung einer konventionellen Netzwerkverbindung mit einer gleichbleibenden Bandbreite dienen können.

In einer speziellen Ausgestaltung des erfindungsgemäßen streckengebundenen Transportsystems umfasst die Fahrstrecke ein Schienensystem. Bei einem Schienensystem ist die Trajektorie der Schienenfahrzeuge exakt festgelegt, so dass auch die Abstände zwischen den fahrzeugseitigen optischen Sende-/Empfangseinrichtungen und den streckenseitigen stationären optischen Sende-/Empfangseinrichtungen festgelegt sind. Mithin können stationäre und mobile Sende-/und Empfangseinrichtungen in sehr geringer Entfernung zueinander angeordnet werden, so dass umweltbedingte Störungen vermieden werden können.

Die Erfindung wird im Folgenden unter Hinweis auf die beigefügten Figuren anhand von Ausführungsbeispielen noch einmal näher erläutert. Es zeigen:
- FIG 1: eine schematische Draufsicht auf ein Datenübertragungssystem für ein schienengebundenes Transportsystem gemäß einem Ausführungsbeispiel der Erfindung,
- FIG 2: das in FIG 1 veranschaulichte Datenübertragungssystem zu einem späteren Zeitpunkt,
- FIG 3: das in FIG 1 und FIG 2 veranschaulichte Datenübertragungssystem zu einem noch späteren Zeitpunkt während einer Übergabe einer Kommunikationsverbindung zwischen streckenseitigen stationären und fahrzeugseitigen Sende-/Empfangseinrichtungen,
- FIG 4: das in FIG 1, FIG 2 und FIG 3 gezeigte Datenübertragungssystem nach der Übergabe einer Kommunikationsverbindung zwischen streckenseitigen stationären und fahrzeugseitigen Sende-/Empfangseinrichtungen,
- FIG 5: eine Draufsicht auf ein Datenübertragungssystem mit beidseitig angeordneten Sende-/Empfangseinrichtungen während einer Phase einer linksseitigen Nutzung der Sende-/Empfangseinrichtungen,
- FIG 6: eine Draufsicht auf das in FIG 5 gezeigte Datenübertragungssystem während einer Phase einer beidseitigen Nutzung der Sende-Empfangseinrichtungen,
- FIG 7: eine Draufsicht auf das in FIG 5 und FIG 6 gezeigte Datenübertragungssystem während einer Phase einer rechtsseitigen Nutzung der Sende-/Empfangseinrichtungen.

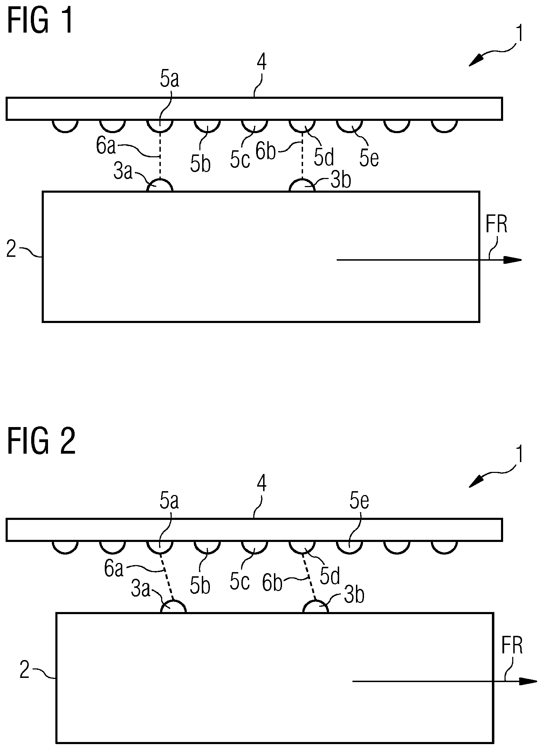

In FIG 1 ist ein Datenübertragungssystem 1 für ein schienengebundenes Transportsystem gemäß einem Ausführungsbeispiel der Erfindung gezeigt. Ein Schienenfahrzeug 2 bewegt sich in Fahrtrichtung FR auf einem Schienenkörper (nicht gezeigt). An dem Schienenfahrzeug 2 sind zwei fahrzeugseitige optische Sende/-Empfangseinrichtungen 3a, 3b seitlich, in diesem Ausführungsbeispiel auf der linken Seite, angeordnet, welche dazu dienen, fahrzeugseitige Kommunikationseinheiten an ein stationäres Kommunikationsnetzwerk, welches beispielsweise Anschluss an das Internet bietet, anzubinden. Optische Sende-/Empfangseinheiten haben den Vorteil, dass sie eine große Bandbreite aufweisen und somit eine sehr hohe Datenübertragungskapazität haben. Die fahrzeugseitigen optischen Sende/- Empfangseinrichtungen 3a, 3b sind in diesem konkreten Ausführungsbeispiel hintereinander in Fahrtrichtung betrachtet angeordnet. Seitlich zur Fahrstrecke des Schienenfahrzeugs 2, in diesem Fall auf der linken Seite in Fahrtrichtung betrachtet, ist eine parallel zu der Fahrstrecke verlaufende Trageinrichtung 4 angeordnet, welche eine Mehrzahl von streckenseitigen, stationären optischen Sende-/Empfangseinrichtungen 5a, 5b, 5c, 5d, 5e umfasst, welche mit einem stationären Netzwerk (nicht gezeigt), beispielsweise dem Internet, verbunden sind und eine Kommunikationsverbindung zwischen dem Schienenfahrzeug 2 und dem stationären Netzwerk herstellen sollen.

Aufgrund des schienengebundenen Fahrwegs des Schienenfahrzeugs 2 kann ein Abstand zwischen den fahrzeugseitigen optischen Sende-/Empfangseinrichtungen 3a, 3b und den streckenseitigen, stationären optischen Sende-/Empfangseinrichtungen 5a, 5b, 5c, 5d, 5e exakt definiert und sehr klein sein. Mithin können atmosphärische Störungen kaum Einfluss auf die Sende-/Empfangsqualität ausüben und die notwendigen Sendeleistungen können gering sein. Zudem lassen sich Ausrichtungen der Sende-/Empfangseinrichtungen aufeinander aufgrund der festgelegten Position von Schienen und Fahrzeug leicht festlegen und kontrollieren, so dass eine störungsfreie Kommunikation erzielt werden kann. Weiterhin kann bei einem Schienensystem eine Störung, zum Beispiel durch eine Blendung des kreuzenden Verkehrs, ausgeschlossen werden. Zu dem in FIG 1 gezeigten Zeitpunkt unterhält eine erste fahrzeugseitige optische Sende-/Empfangseinrichtung 3a eine erste Kommunikationsverbindung 6a mit einer der ersten fahrzeugseitigen optischen Sende-/Empfangseinrichtung gegenüberliegenden ersten streckenseitigen optischen Sende-/Empfangseinrichtung 5a. Weiterhin unterhält eine zweite fahrzeugseitige optische Sende-/Empfangseinrichtung 3b eine zweite Kommunikationsverbindung 6b mit einer der zweiten fahrzeugseitigen optischen Sende-/Empfangseinrichtung 3b gegenüberliegenden zweiten streckenseitigen optischen Sende-/Empfangseinrichtung 5d. Vorteilhaft können bei der in FIG 1 gewählten Anordnung der fahrzeugseitigen optischen Sende-/Empfangseinrichtungen 3a, 3b in Längsrichtung Daten parallel über beide Kommunikationskanäle 6a, 6b gesendet werden, so dass die technisch bedingte große Bandbreite einzelner Kommunikationskanäle noch gesteigert werden kann.

In FIG 2 ist das in FIG 1 veranschaulichte Datenübertragungssystem 1 zu einem späteren Zeitpunkt skizziert, bei dem sich das Schienenfahrzeug 2 um etwas weniger als eine halbe Distanz zwischen zwei streckenseitigen, stationären optischen Sende-/Empfangseinrichtungen vorwärts bewegt hat. Sowohl die erste Kommunikationsverbindung 6a zwischen der ersten fahrzeugseitigen optischen Sende-/Empfangsrichtung 3a und der ersten streckenseitigen optischen Sende-/Empfangseinrichtung 5a als auch die zweite Kommunikationsverbindung 6b zwischen der zweiten fahrzeugseitigen optischen Sende-/Empfangsrichtung 3b und der zweiten streckenseitigen optischen Sende-/Empfangseinrichtung 5d bestehen in dieser Phase noch. Allerdings befinden sich nun auch benachbarte dritte und vierte streckenseitige stationäre optische Sende-/Empfangseinrichtungen 5b, 5e bereits in Reichweite der ersten streckenseitigen optischen Sende-/Empfangseinrichtung 5a bzw. der zweiten streckenseitigen optischen Sende-/Empfangseinrichtung 5b.

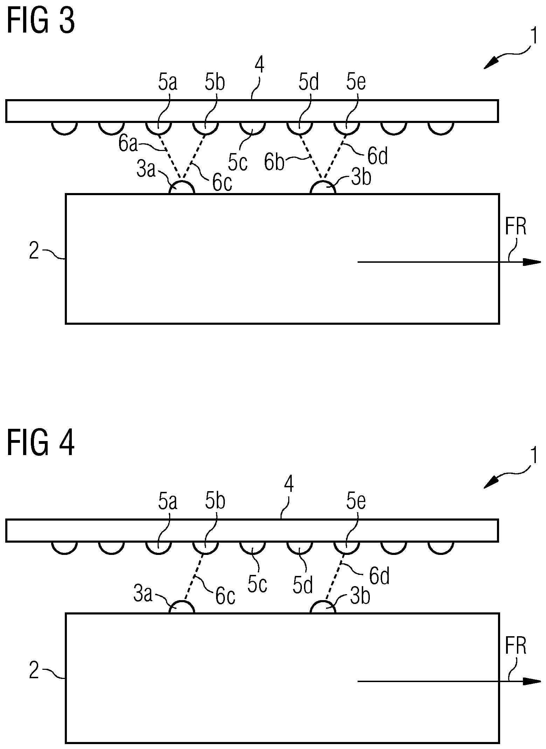

In FIG 3 ist das in FIG 1 und FIG 2 veranschaulichte Datenübertragungssystem 1 zu einem Zeitpunkt skizziert, zu dem sich das Schienenfahrzeug 2 um eine halbe Distanz zwischen zwei streckenseitigen, stationären optischen Sende-/Empfangseinrichtungen vorwärts bewegt hat. In dieser Situation wird von der ersten fahrzeugseitigen optischen Sende-/Empfangseinrichtung 3a eine zusätzliche dritte Kommunikationsverbindung 6c mit einer zu der ersten streckenseitigen, stationären optischen Sende-/Empfangseinrichtung 5a benachbarten dritten streckenseitigen, stationären optischen Sende-/Empfangseinrichtung 5b aufgebaut, während die erste Kommunikationsverbindung 6a mit der ersten streckenseitigen, stationären optischen Sende-/Empfangseinrichtung 5a aufrechterhalten wird. Analog dazu wird auch von der zweiten fahrzeugseitigen optischen Sende-/Empfangseinrichtung 3b eine zusätzliche vierte Kommunikationsverbindung 6d mit einer zu der zweiten streckenseitigen, stationären optischen Sende-/Empfangseinrichtung 5d benachbarten vierten streckenseitigen, stationären optischen Sende-/Empfangseinrichtung 5e aufgebaut, während die zweite Kommunikationsverbindung 6b mit der zweiten streckenseitigen, stationären optischen Sende-/Empfangseinrichtung 5d noch aufrechterhalten wird.

In FIG 4 ist das in FIG 1, FIG 2 und FIG 3 veranschaulichte Datenübertragungssystem 1 zu einem Zeitpunkt skizziert, zu dem sich das Schienenfahrzeug 2 um mehr als eine halbe Distanz zwischen zwei streckenseitigen, stationären optischen Sende-/Empfangseinrichtungen vorwärts bewegt hat. Zu diesem Zeitpunkt bestehen nur noch die dritte Kommunikationsverbindung 6c zwischen der ersten fahrzeugseitigen optischen Sende-/Empfangseinrichtung 3a und der dritten streckenseitigen, stationären optischen Sende-/Empfangseinrichtung 5b und die vierte Kommunikationsverbindung 6d zwischen der zweiten fahrzeugseitigen optischen Sende-/Empfangseinrichtung 3b und der vierten streckenseitigen, stationären Sende-/Empfangseinrichtung 5e. Dagegen wurden die erste Kommunikationsverbindung 6a zwischen der ersten fahrzeugseitigen optischen Sende-/Empfangseinrichtung 3a und der ersten streckenseitigen, stationären optischen Sende-/Empfangseinrichtung 5a und die zweite Kommunikationsverbindung 6b zwischen der zweiten fahrzeugseitigen optischen Sende-/Empfangseinrichtung 3b und der zweiten streckenseitigen, stationären optischen Sende-/Empfangseinrichtung 5d bereits abgebrochen. Mithin ist eine ständige ununterbrochene breitbandige Datenübertragung zwischen dem Fahrzeug 2 und dem streckenseitig angeschlossenen Netzwerk stets gewährleistet.

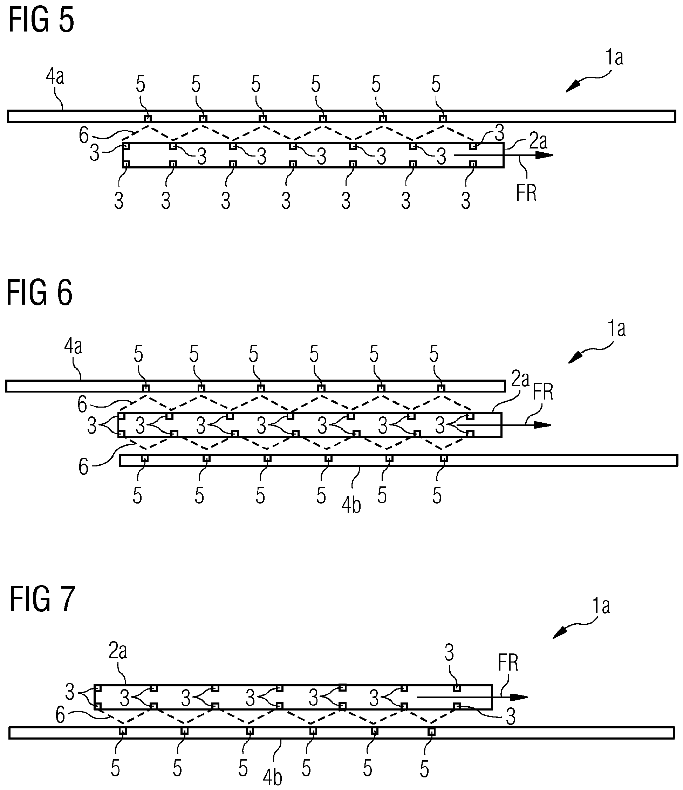

FIG 5, FIG 6 und FIG 7 veranschaulichen ein Datenübertragungssystem 1a gemäß einem zweiten Ausführungsbeispiel der Erfindung. Das Datenübertragungssystem 1a gemäß einem zweiten Ausführungsbeispiel weist im Gegensatz zu dem Datenübertragungssystem 1 gemäß einem ersten Ausführungsbeispiel abschnittsweise auf der linken Streckenseite 4a angeordnete streckenseitige, stationäre optische Sende-/Empfangseinrichtungen 5 (siehe FIG 5) und abschnittsweise auf der rechten Streckenseite 4b angeordnete streckenseitige, stationäre optische Sende-/Empfangseinrichtungen 5 (siehe FIG 7) auf. In einem Übergangsabschnitt (siehe FIG 6) sind die streckenseitigen optischen Sende-/Empfangseinrichtungen 5 beidseitig angeordnet, so dass bei der Durchfahrt durch diesen Übergangsabschnitt eine Kommunikation in beide Richtungen möglich ist. Hierfür weist das in FIG 5, FIG 6, FIG 7 gezeigte Schienenfahrzeug 2a auf beiden Seitenflächen angeordnete fahrzeugseitige optische Sende-/Empfangseinrichtungen 3 auf. Mithin ist eine unterbrechungsfreie Kommunikation zwischen Fahrzeug 2a und stationärem Netzwerk ermöglicht.

Es wird abschließend noch einmal darauf hingewiesen, dass es sich bei den vorbeschriebenen Verfahren und Vorrichtungen lediglich um bevorzugte Ausführungsbeispiele der Erfindung handelt.

So wurden das Verfahren und die Vorrichtung in erster Linie im Zusammenhang mit dem Einsatz von Schienenfahrzeugen erläutert. Das genannte Verfahren und die beschriebenen Einrichtungen sind jedoch nicht auf die Anwendung auf Schienenfahrzeuge beschränkt, sondern können auch im Zusammenhang mit anderen Fahrzeugen, wie zum Beispiel Straßenfahrzeugen eingesetzt werden. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Datenübertragungssystem (1, 1a) für ein streckengebundenes Transportsystem mit mindestens einem Fahrzeug (2, 2a), aufweisend:
- eine Mehrzahl von fahrzeugseitigen optischen Sende-/Empfangseinrichtungen (3, 3a, 3b) an dem mindestens einen Fahrzeug, welche seitlich auf beiden Seiten des Fahrzeugs (2, 2a) und hintereinander in Fahrtrichtung betrachtet angeordnet sind,
- eine Mehrzahl von streckenseitigen, stationären optischen Sende-/Empfangseinrichtungen (5, 5a, 5b, 5c, 5d, 5e), welche längs einer Fahrstrecke des Fahrzeugs (2, 2a) seitlich zu der Fahrstrecke (2, 2a) abschnittsweise auf der linken Streckenseite (4a) und abschnittsweise auf der rechten Streckenseite (4b) angeordnet sind, wobei in einem Übergangsabschnitt die streckenseitigen optischen Sende-/Empfangseinrichtungen (5) auf beiden Streckenseiten (4a, 4b) angeordnet sind,
- wobei die Mehrzahl von fahrzeugseitigen optischen Sende-/Empfangseinrichtungen (3, 3a, 3b) dazu eingerichtet sind, zumindest mit der ihnen am nächsten positionierten streckenseitigen, stationären optischen Sende-/Empfangseinrichtung (5, 5a, 5b, 5c, 5d, 5e) zu kommunizieren und unabhängig voneinander separate Kommunikationsverbindungen (6) mit der jeweils vollen möglichen Bandbreite mit einer der streckenseitigen, stationären optischen Sende-/Empfangseinrichtungen (5) zu halten, und
- wobei in einem Übergangsabschnitt das Fahrzeug gleichzeitig über fahrzeugseitige optische Sende-/Empfangseinrichtungen (3, 3a, 3b) auf beiden Seiten des Fahrzeugs kommuniziert.

2. Datenübertragungssystem nach Anspruch 1, wobei die Mehrzahl von streckenseitigen, stationären optischen Sende-/Empfangseinrichtungen (5a, 5d) dazu eingerichtet sind, eine optische Kommunikationsverbindung (6a, 6b) mit einer fahrzeugseitigen optischen Sende-/Empfangseinrichtung (3a, 3b) aufrechtzuerhalten, bis eine Verbindungsaufnahme der in Fahrtrichtung nächsten streckenseitigen, stationären optischen Sende-/Empfangseinrichtungen (5b, 5e) mit einer jeweiligen fahrzeugseitigen optischen Sende-/Empfangseinrichtung (3a, 3b) erreicht ist, so dass sich die jeweilige fahrzeugseitige optische Sende-/Empfangseinrichtung (3a, 3b) ständig in Verbindung mit mindestens einer streckenseitigen, stationären optischen Sende-/Empfangseinrichtung (5a, 5b, 5d, 5e) befindet.

3. Datenübertragungssystem nach Anspruch 2, wobei die streckenseitigen, stationären optischen Sende-/Empfangseinrichtungen (5a, 5b, 5c, 5d, 5e) von der Mehrzahl von fahrzeugseitigen optischen Sende-/Empfangseinrichtungen (3a, 3b) und voneinander derart beabstandet sind, dass eine ständige Verbindung zu der mindestens einen fahrzeugseitigen optischen Sende-/Empfangseinrichtung (3a, 3b) ermöglicht ist.

4. Datenübertragungssystem nach einem der vorstehenden Ansprüche, aufweisend eine Mehrzahl von fahrzeugseitigen optische Sende-/Empfangseinrichtungen (3a, 3b) an einem jeweiligen Fahrzeug (2), welche in Längsrichtung angeordnet sind und dazu eingerichtet sind, unabhängig voneinander separate Kommunikationsverbindungen (6a, 6b) mit der jeweils vollen möglichen Bandbreite mit einer der streckenseitigen, stationären optischen Sende-/Empfangseinrichtungen (5a, 5d) zu halten.

5. Datenübertragungssystem nach einem der vorstehenden Ansprüche, wobei die optischen Sende-/Empfangseinrichtungen (3, 3a, 3b, 5, 5a, 5b, 5c, 5d, 5e) dazu eingerichtet sind, über mehrere unterschiedliche Lichtwellenlängen miteinander zu kommunizieren.

6. Datenübertragungssystem nach einem der vorstehenden Ansprüche, wobei die optischen Sende-/Empfangseinrichtungen (3, 3a, 3b, 5, 5a, 5b, 5c, 5d, 5e) dazu eingerichtet sind, über mehrere unterschiedliche Modulationsfrequenzen je Lichtwellenlänge miteinander zu kommunizieren.

7. Datenübertragungssystem nach einem der vorstehenden Ansprüche, wobei die streckenseitigen, stationären optischen Sende-/Empfangseinrichtungen (5) auf beiden Seiten der Fahrstrecke in Längsrichtung zumindest teilweise überlappend angeordnet sind und die fahrzeugseitigen Sende-/Empfangseinrichtungen (3) auf beiden Seiten des jeweiligen Fahrzeugs (2a) angeordnet sind.

8. Streckengebundenes Transportsystem, aufweisend:
- mindestens eine Fahrstrecke, auf der sich streckengebundene Fahrzeuge (2, 2a) bewegen,
- mindestens ein Datenübertragungssystem (1, 1a) nach einem der vorstehenden Ansprüche.

9. Verfahren zum Übermitteln von Daten zwischen einem Fahrzeug (2, 2a) und einem stationären Netzwerk in einem streckengebundenen Transportsystem, aufweisend
- eine Mehrzahl von fahrzeugseitigen optischen Sende-/Empfangseinrichtungen (3, 3a, 3b), welche seitlich auf beiden Seiten des Fahrzeugs (2, 2a) und hintereinander in Fahrtrichtung betrachtet angeordnet sind, und
- eine Mehrzahl von streckenseitigen, stationären optischen Sende-/Empfangseinrichtungen (5, 5a, 5b, 5c, 5d, 5e), welche längs einer Fahrstrecke des Fahrzeugs (2, 2a) seitlich zu der Fahrstrecke (2, 2a) abschnittsweise auf der linken Streckenseite (4a) und abschnittsweise auf der rechten Streckenseite (4b) angeordnet sind, wobei in einem Übergangsabschnitt die streckenseitigen optischen Sende-/Empfangseinrichtungen (5) auf beiden Streckenseiten (4a, 4b) angeordnet sind, und mit dem stationären Netzwerk über eine Kommunikationsverbindung verbunden sind,
- wobei die Mehrzahl von fahrzeugseitigen optischen Sende-/Empfangseinrichtungen (3, 3a, 3b) zumindest mit der ihnen am nächsten positionierten streckenseitigen, stationären optischen Sende-/Empfangseinrichtung (5, 5a, 5b, 5c, 5d, 5e) kommunizieren und unabhängig voneinander separate Kommunikationsverbindungen (6) mit der jeweils vollen möglichen Bandbreite mit einer der streckenseitigen, stationären optischen Sende-/Empfangseinrichtungen (5) halten, und
- wobei in einem Übergangsabschnitt das Fahrzeug gleichzeitig über fahrzeugseitige optische Sende-/Empfangseinrichtungen (3, 3a, 3b) auf beiden Seiten des Fahrzeugs kommuniziert.

## Claims

1. Data transmission system (1, 1a) for a track-bound transport system comprising at least one vehicle (2, 2a) having:
- a plurality of vehicle-mounted optical transmitting/receiving devices (3, 3a, 3b) on the at least one vehicle, arranged to the side, on both sides of the vehicle (2, 2a) and behind one another when viewed in the direction of travel,
- a plurality of track-mounted stationary optical transmitting/receiving devices (5, 5a, 5b, 5c, 5d, 5e), arranged along a route to be travelled by the vehicle (2, 2a), on the side of the route (2, 2a) in sections on the left side of the track (4a) and in sections on the right side of the track (4b), wherein in a transitional section the track-mounted optical transmitting/receiving devices (5) are arranged on both sides of the track (4a, 4b),
- wherein the plurality of vehicle-mounted optical transmitting/receiving devices (3, 3a, 3b) is designed to communicate at least with the track-mounted stationary optical transmitting/receiving device (5, 5a, 5b, 5c, 5d, 5e) positioned the closest thereto and independently to maintain separate communication links (6) at as full a bandwidth as possible with one of the track-mounted stationary optical transmitting/receiving devices (5), and
- wherein in a transitional section the vehicle simultaneously communicates via vehicle-mounted optical transmitting/receiving devices (3, 3a, 3b) on both sides of the vehicle.

2. Data transmission system according to claim 1, wherein the plurality of track-mounted stationary optical transmitting/receiving devices (5a, 5d) is designed to maintain an optical communication link (6a, 6b) with a vehicle-mounted optical transmitting/receiving device (3a, 3b) until a link is established between the next track-mounted stationary optical transmitting/receiving devices (5b, 5e) in the direction of travel and a respective vehicle-mounted optical transmitting/receiving device (3a, 3b) so that the respective vehicle-mounted optical transmitting/receiving device (3a, 3b) is constantly in connection with at least one track-mounted stationary optical transmitting/receiving device (5a, 5b, 5d, 5e).

3. Data transmission system according to claim 2, wherein the track-mounted stationary optical transmitting/receiving devices (5a, 5b, 5c, 5d, 5e) are spaced apart from the plurality of vehicle-mounted optical transmitting/receiving devices (3a, 3b) and from each other such that a constant connection to the at least one vehicle-mounted optical transmitting/receiving device (3a, 3b) is enabled.

4. Data transmission system according to one of the preceding claims having a plurality of vehicle-mounted optical transmitting/receiving devices (3a, 3b) on a respective vehicle (2) arranged in the longitudinal direction and designed independently to maintain separate communication links (6a, 6b) at as full a bandwidth as possible with one of the track-mounted stationary optical transmitting/receiving devices (5a, 5d).

5. Data transmission system according to one of the preceding claims, wherein the optical transmitting/receiving devices (3, 3a, 3b, 5, 5a, 5b, 5c, 5d, 5e) are designed to communicate with each other via a plurality of different optical wavelengths.

6. Data transmission system according to one of the preceding claims, wherein the optical transmitting/receiving devices (3, 3a, 3b, 5, 5a, 5b, 5c, 5d, 5e) are designed to communicate with each other via a plurality of different modulation frequencies per optical wavelength.

7. Data transmission system according to one of the preceding claims, wherein the track-mounted stationary optical transmitting/receiving devices (5) are arranged at least partially overlapping on both sides of the route in the longitudinal direction and the vehicle-mounted optical transmitting/receiving devices (3) are arranged on both sides of the respective vehicle (2a).

8. Track-bound transport system having:
- at least one route on which track-bound vehicles (2, 2a) travel,
- at least one data transmission system (1, 1a) according to one of the preceding claims.

9. Method for transmitting data between a vehicle (2, 2a) and a stationary network in a track-bound transport system having
- a plurality of vehicle-mounted optical transmitting/receiving devices (3, 3a, 3b) arranged to the side, on both sides of the vehicle (2, 2a) and behind one another when viewed in the direction of travel and
- a plurality of track-mounted stationary optical transmitting/receiving devices (5, 5a, 5b, 5c, 5d, 5e) arranged along a route to be travelled by the vehicle (2, 2a), on the side of the route (2, 2a) in sections on the left side of the track (4a) and in sections on the right side of the track (4b), wherein in a transitional section the track-mounted optical transmitting/receiving devices (5) are arranged on both sides of the track (4a, 4b), and connected to the stationary network via a communication link,
- wherein the plurality of vehicle-mounted optical transmitting/receiving devices (3, 3a, 3b) communicates at least with the track-mounted stationary optical transmitting/receiving device (5, 5a, 5b, 5c, 5d, 5e) positioned the closest thereto and independently maintains separate communication links (6) at as full a bandwidth as possible with one of the track-mounted stationary optical transmitting/receiving devices (5), and
- wherein in a transitional section the vehicle simultaneously communicates via vehicle-mounted optical transmitting/receiving devices (3, 3a, 3b) on both sides of the vehicle.

## Revendications

1. Système (1, 1a) de transmission de données d'un système de transport guidé sur rail, comprenant au moins un véhicule (2, 2a), ayant :
- une pluralité de dispositifs (3, 3a, 3b) optiques d'émission/réception embarqués sur le au moins un véhicule, qui sont disposés, considéré dans le sens de marche, latéralement des deux côtés du véhicule (2, 2a) et les uns derrière les autres,
- une pluralité de dispositifs (5, 5a, 5b, 5c, 5d, 5e) optiques fixes d'émission/réception sur la voie, qui sont disposés le long d'une voie de circulation du véhicule (2, 2a) latéralement à la voie (2, 2a) de circulation par endroit du côté (4a) gauche de la voie et par endroit du côté (4b) droit de la voie, dans lequel, dans un tronçon de transition, les dispositifs (5) optiques d'émission/réception sur la voie sont disposés des deux côtés (4a, 4b) de la voie,
- dans lequel la pluralité de dispositifs (3, 3a, 3b) optiques d'émission/réception embarqués sont conçus pour communiquer, au moins, avec les dispositifs (5, 5asur côté de la voie, en la position qui leur est la plus proche et pour maintenir des liaisons (6) de communication distinctes indépendantes les unes des autres ayant la largeur de bande possible complète respectivement avec l'un des dispositifs (5) optiques fixes d'émission/réception sur la voie, et
- dans lequel, dans un tronçon de transition, le véhicule communique en même temps des deux côtés du véhicule par des dispositifs (3, 3a, 3b) optiques d'émission/réception embarqués.

2. Système de transmission de données suivant la revendication 1, dans lequel la pluralité de dispositifs (5a, 5d) optiques fixes d'émission/réception sur la voie sont conçus pour maintenir une liaison (6a, 6b) de communication optique avec un dispositif (3a, 3b) optique d'émission/réception embarqué jusqu'à ce que soit atteinte une réception de liaison des dispositifs (5b, 5e) optiques fixes d'émission/réception les plus proches dans le sens de marche avec un dispositif (3a, 3b) optique d'émission/réception respectif embarqué, de manière à ce que le dispositif (3a, 3b) optique respectif d'émission/réception du côté du véhicule se trouve constamment en liaison avec au moins un dispositif (5a, 5b, 5d, 5e) optique fixe d'émission/réception sur la voie.

3. Système de transmission de données suivant la revendication 2, dans lequel les dispositifs (5a, 5b, 5c, 5d, 5e) optiques fixes d'émission/réception sur la voie sont à distance les uns des autres et de la pluralité de dispositifs (3a, 3b) optiques d'émission/réception embarqués, de manière à rendre possible une liaison permanente avec le au moins un dispositif (3a, 3b) optique d'émission/réception embarqué.

4. Système de transmission de données suivant l'une des revendications précédentes, ayant une pluralité de dispositifs (3a, 3b) optiques d'émission/réception embarqués sur un véhicule (2) respectif, qui sont disposés dans la direction longitudinale et conçus pour maintenir des liaisons (6a, 6b) de communication distinctes indépendamment les unes des autres ayant la largeur de bande possible complète respectivement avec l'un des dispositifs (5a, 5b) optiques fixes d'émission/réception sur la voie.

5. Système de transmission de données suivant l'une des revendications précédentes, dans lequel les dispositifs (3, 3a, 3b, 5, 5a, 5b, 5c, 5d, 5e) optiques d'émission/réception sont conçus pour communiquer entre eux sur plusieurs longueurs d'onde lumineuse différentes.

6. Système de transmission de données suivant l'une des revendications précédentes, dans lequel les dispositifs (3, 3a, 3b, 5, 5a, 5b, 5c, 5d, 5e) optiques d'émission/réception sont conçus pour communiquer entre eux par plusieurs fréquences de modulation différentes pour chaque longueur d'onde lumineuse.

7. Système de transmission de données suivant l'une des revendications précédentes, dans lequel les dispositifs (5) optiques fixes d'émission/réception sur la voie sont disposés des deux côtés de la voie de circulation dans la direction longitudinale, au moins en partie, à chevauchement et les dispositifs (3) d'émission/réception embarqués sont disposés des deux côtés du véhicule (2a) respectif.

8. Système de transport guidé sur rail, comportant :
- au moins une voie de circulation, sur laquelle se déplacent des véhicules (2, 2a) guidés sur rails,
- au moins un système (1, 1a) de transmission de données suivant l'une des revendications précédentes.

9. Procédé de transmission de données entre un véhicule (2, 2a) et un réseau fixe d'un système de transport guidé sur rail, ayant :
- une pluralité de dispositifs (3, 3a, 3b) optiques d'émission/réception embarqués, sur le au moins un véhicule, qui sont disposés, considéré dans le sens de marche, latéralement des deux côtés du véhicule (2, 2a) et les uns derrière les autres,
- une pluralité de dispositifs (5, 5a, 5b, 5c, 5d, 5e) optiques fixes d'émission/réception sur la voie, qui sont disposés le long d'une voie de circulation du véhicule (2, 2a) latéralement à la voie (2, 2a) de circulation par endroit du côté (4a) gauche de la voie et par endroit du côté (4b) droit de la voie, dans lequel, dans un tronçon de transition, les dispositifs (5) optiques d'émission/réception sur la voie sont disposés des deux côtés (4a, 4b) de la voie, et sont reliés au réseau fixe par une liaison de communication,
- dans lequel la pluralité de dispositifs (3, 3a, 3b) optiques d'émission/réception embarqués communiquent au moins avec les dispositifs (5, 5a, 5b, 5c, 5d, 5e) optique fixe d'émission/réception sur la voie, en la position qui leur est la plus proche, et maintiennent des liaisons (6) de communication distinctes indépendantes les unes des autres ayant la largeur de bande possible complète respectivement avec l'un des dispositifs (5) optiques fixes d'émission/réception sur la voie, et
- dans lequel, dans un tronçon de transition, le véhicule communique en même temps des deux côtés du véhicule par des dispositifs (3, 3a, 3b) optiques d'émission/réception embarqués.
